# EUROPÄISCHE PATENTSCHRIFT

(11) **EP 3 650 224 B1**
(45) Veröffentlichungstag und Bekanntmachung des Hinweises auf die Patenterteilung: **21.06.2023**
(21) Anmeldenummer: 18205479.1
(22) Anmeldetag: 09.11.2018
(51) Int. Cl.: B41F 33/00

(54) **VORRICHTUNG UND VERFAHREN ZUM BEDRUCKEN EINES ARTIKELS**
DEVICE AND METHOD FOR PRINTING AN ARTICLE
DISPOSITIF ET PROCÉDÉ D'IMPRESSION D'UN ARTICLE

(43) Veröffentlichungstag der Anmeldung: 13.05.2020
(73) Patentinhaber: Phoenix Contact GmbH & Co. KG, 32825 Blomberg (DE)
(72) Erfinder: Faltinski, Sebastian, 32657 Lemgo (DE); Frenser, Jens, 32756 Detmold (DE); Kurde, Marvin, 33098 Paderborn (DE); Limberg, Sandro, 32825 Blomberg (DE); Mathes, Marcus, 32760 Detmold (DE); Reitz, Mattes, 32657 Lemgo (DE); Schmidt, Jörg, 32469 Petershagen (DE); Tieben, Matthias, 32105 Bad Salzuflen (DE); Weber, Timo, 32760 Detmold (DE)
(74) Vertreter: Maiwald GmbH

(56) Entgegenhaltungen:
- EP-A1- 3 064 354
- DE-A1-102009 046 594
- DE-A1-102011 075 343

## Beschreibung

### Technisches Gebiet

Die vorliegende Erfindung betrifft Systeme für die Bedruckung und Beschriftung von Produktionsgütern.

Insbesondere betrifft die vorliegende Erfindung eine Vorrichtung und ein Verfahren zum Bedrucken eines Artikels.

### Technischer Hintergrund

Der Druckprozess für frei konfigurierbare Artikel erfordert, dass auch Artikel oder Produktionsgüter bedruckt werden, für die keine entsprechenden Daten zur Bedruckung in einem Druckdatenformat vorliegen, etwa da es sich um kundenindividuelle und durch Produktkonfiguratoren erstellte Artikel mit modularem Aufbau handelt.

Die DE 10 2009 046594 A1 beschreibt ein Verfahren zur Regelung eines Druckprozesses, durch welchen auf Grundlage von Daten aus einer Druckvorstufe mittels einer Druckeinrichtung ein Bedruckstoff bedruckt wird, wobei das Druckergebnis auf dem Bedruckstoff mit einem Sollwert verglichen und daraus ein Korrekturwert abgeleitet wird, und wobei die Daten der Druckvorstufe mit dem Korrekturwert korrigiert werden.

Die EP 3 064 354 A1 beschreibt automatisierte Verfahren zum Herstellen von personalisierten Druckendprodukten, welche jeweils eine Druckproduktkollektion und mindestens ein personalisiertes Druckprodukt aufweisen.

Die DE 10 2011 075343 A1 beschreibt Systeme zur Beurteilung eines Produktexemplars am Leitstand einer Druckmaschine mit einer Ablage für das zu beurteilende Produktexemplar, mit einem Monitor zur Anzeige einer das Druckbild des Produktexemplars simulierenden Druckbildreferenz, und mit einer die Ablage beleuchtenden Leuchte, welche zur Abstrahlung von Licht einer veränderbaren Lichtstärke ausgebildet ist

### Zusammenfassung der Erfindung

Es ist eine Aufgabe der vorliegenden Erfindung, eine verbesserte Vorrichtung und ein verbessertes Verfahren für die Bedruckung und/oder Beschriftung von Produktionsgütern bereitzustellen.

Diese Aufgabe wird durch die Gegenstände der unabhängigen Patentansprüche gelöst. Weiterbildungen und Ausführungsformen sind den abhängigen Patentansprüchen, der Beschreibung und den Figuren der Zeichnungen zu entnehmen.

Ein erster Aspekt der vorliegenden Erfindung betrifft eine Vorrichtung zum Bedrucken eines Artikels, wobei die Vorrichtung eine Datenbereitstellungseinrichtung und eine Steuereinrichtung umfasst.

Die Datenbereitstellungseinrichtung ist dazu ausgebildet, artikelspezifische Bedruckungsdaten für den Artikel aus Produktdaten des Artikels bereitzustellen und maschinenspezifische Bedruckungsdaten für den Artikel in Abhängigkeit einer für den Bedruckungsprozess zu verwendenden Druckmaschine bereitzustellen, wobei die Datenbereitstellungseinrichtung dazu ausgebildet ist, die artikelspezifischen Bedruckungsdaten für den Artikel aus den in einem Neutraldaten-Format vorliegenden Produktdaten des Artikels bereitzustellen, welche den Artikel nach kundenindividueller Konfiguration definieren und klassifizieren und welche Parameter, Eigenschaften, und Ausführungsoptionen des Artikels beschreiben.

Die Steuereinrichtung ist dazu ausgebildet, die artikelspezifischen Bedruckungsdaten und die maschinenspezifischen Bedruckungsdaten zusammenzufügen und darauf basierend die Druckmaschine zum Bedrucken des Artikels anzusteuern.

Die vorliegende Erfindung ermöglicht, ein flexibles und an eine jeweilige Druckmaschine angepasstes Bedrucken eines frei konfigurierten Artikels zu gewährleisten.

Die vorliegende Erfindung ermöglicht vorteilhaft, dass für frei konfigurierbare - begrenzt konfigurierbare oder unbegrenzt konfigurierbare - Artikel Bedruckungsdaten aus den vorhandenen Produktdaten erstellt werden und für die Bedruckung entsprechend verwendet werden.

Die Produktdaten werden durch den Konfigurator erstellt und die vorliegende Erfindung ermöglicht vorteilhaft, die benötigte Bedruckung aus den Produktdaten abzuleiten, welche im Neutraldatenformat vorliegen. Mit anderen Worten ausgedrückt, es erfolgt eine virtuelle oder simulierte Generierung des Druckbildes aus den Produktdaten.

Die vorliegende Erfindung ermöglicht vorteilhaft, dass bei der Produktion des Artikels die Bedruckungsinformation für den Artikel aus den Produktdaten erzeugt wird. Dabei werden in den Produktdaten definierte, artikelspezifische Eigenschaften, wie etwa ein Teilungsmaß, und maschinenspezifische Eigenschaften berücksichtigt.

Dabei werden die Produktdaten in der Form des Neutralformats mit maschinenspezifischen Daten der Druckmaschine zusammengefügt, um ein korrektes Druckbild zu erstellen.

Vorteilhafte Ausgestaltungen der vorliegenden Erfindung sind den Unteransprüchen zu entnehmen.

In einer vorteilhaften Ausführungsform der vorliegenden Erfindung ist vorgesehen, dass die Datenbereitstellungseinrichtung dazu ausgebildet ist, Druckprozess-spezifische Bedruckungsdaten für den Artikel in Abhängigkeit eines zu verwendenden Bedruckungsprozesses bereitzustellen.

In einer vorteilhaften Ausführungsform der vorliegenden Erfindung ist vorgesehen, dass die Steuereinrichtung dazu ausgebildet ist, die artikelspezifischen Bedruckungsdaten und die maschinenspezifischen Bedruckungsdaten und die Druckprozess-spezifischen Bedruckungsdaten zusammenzufügen und darauf basierend die Druckmaschine zum Bedrucken des Artikels anzusteuern.

In einer vorteilhaften Ausführungsform der vorliegenden Erfindung ist vorgesehen, dass die Druckprozess-spezifischen Bedruckungsdaten Daten für ein Auftragen eines Haftvermittlers umfassen und der Bedruckungsprozess einen Aufbringungsprozess des Haftvermittlers zur Vorbereitung für einen Druckprozess umfasst.

In einer vorteilhaften Ausführungsform der vorliegenden Erfindung ist vorgesehen, dass die artikelspezifischen Bedruckungsdaten Daten über:
i) eine Anzahl von spannungsführenden Leitern; und/oder
ii) ein Teilungsmaß; und/oder
iii) einen Leitungsquerschnitt; und/oder
iv) eine Anzahl von Leitungspolen; und/oder
v) eine Abmessung; und/oder
vi) einen Bemessungsdauerstrom; und/oder
vii) einen Kennzeichnungstext; und/oder
viii) eine Artikelfarbe; und/oder
ix) ein Artikelmaterial;
umfassen.

In einer vorteilhaften Ausführungsform der vorliegenden Erfindung ist vorgesehen, dass die maschinenspezifischen Bedruckungsdaten Daten über:
i) eine Druckauflösung der für den Bedruckungsprozess verwendeten Druckmaschine; und/oder
ii) eine Volltondichte der für den Bedruckungsprozess verwendeten Druckmaschine; und/oder
iii) eine Druckleistung der für den Bedruckungsprozess verwendeten Druckmaschine; und/oder
iv) eine Formatvorgabe der für den Bedruckungsprozess verwendeten Druckmaschine; und/oder
v) eine maximale Bedruckungsfläche der für den Bedruckungsprozess verwendeten Druckmaschine; und/oder
vi) eine minimale Bedruckungsfläche der für den Bedruckungsprozess verwendeten Druckmaschine; und/oder
vii) mit der Druckmaschine druckbare Farben;
umfassen.

Erfindungsgemäß ist vorgesehen, dass die Produktdaten in einem Neutraldaten-Format bereitgestellt sind.

In einer vorteilhaften Ausführungsform der vorliegenden Erfindung ist vorgesehen, dass das Neutraldaten-Format ein
i) XML-Format; und/oder
ii) plattformunabhängiges Datenformat; und/oder
iii) implementationsunabhängiges Datenformat; und/oder
iv) M2M-Datenformat
umfasst.

In einer vorteilhaften Ausführungsform der vorliegenden Erfindung ist vorgesehen, dass die Vorrichtung ferner eine Schnittstelleneinrichtung aufweist, welche dazu ausgebildet ist, die artikelspezifischen Bedruckungsdaten, für den Artikel aus einer Beschreibung des Artikels bereitzustellen.

In einer vorteilhaften Ausführungsform der vorliegenden Erfindung ist vorgesehen, dass die Datenbereitstellungseinrichtung dazu ausgebildet ist, die artikelspezifischen Bedruckungsdaten und/oder die maschinenspezifischen Bedruckungsdaten an ein mit der Vorrichtung gekoppeltes Rechnernetz zu übersenden.

In einem zweiten Aspekt der vorliegenden Erfindung ist ein Verfahren zum Bedrucken eines Artikels vorgesehen, welches folgende sukzessive Verfahrensschritte umfasst:
Als ein erster Schritt des Verfahrens erfolgt ein Bereitstellen von artikelspezifischen Bedruckungsdaten für den Artikel aus in einem Neutraldaten-Format vorliegenden Produktdaten des Artikels, welche den Artikel nach kundenindividueller Konfiguration definieren und klassifizieren und welche Parameter, Eigenschaften, und Ausführungsoptionen des Artikels beschreiben, mittels einer Datenbereitstellungseinrichtung.

Als ein zweiter Schritt des Verfahrens erfolgt ein Bereitstellen von maschinenspezifischen Bedruckungsdaten aus in einem Neutraldaten-Format vorliegenden Produktdaten in Abhängigkeit einer für den Bedruckungsprozess zu verwendenden Druckmaschine mittels der Datenbereitstellungseinrichtung.

Als ein dritter Schritt des Verfahrens erfolgt ein Zusammenfügen der artikelspezifischen Bedruckungsdaten und der maschinenspezifischen Bedruckungsdaten mittels einer Steuereinrichtung.

Als ein vierter Schritt des Verfahrens erfolgt ein auf den zusammengefügten artikelspezifischen und maschinenspezifischen Bedruckungsdaten basierendes Ansteuern der Druckmaschine zum Bedrucken des Artikels mittels der Steuereinrichtung.

In einer vorteilhaften Ausführungsform der vorliegenden Erfindung ist vorgesehen, dass das Verfahren ferner die folgenden Verfahrensschritte umfasst: ein Bereitzustellen von Druckprozess-spezifischen Bedruckungsdaten für den Artikel in Abhängigkeit eines zu verwendenden Bedruckungsprozesses mittels der Datenbereitstellungseinrichtung und ein Zusammenfügen der artikelspezifischen Bedruckungsdaten und der maschinenspezifischen Bedruckungsdaten und der Druckprozess-spezifischen Bedruckungsdaten und darauf basierend Ansteuern der Druckmaschine zum Bedrucken des Artikels.

In einer vorteilhaften Ausführungsform der vorliegenden Erfindung ist vorgesehen, dass die Druckprozess-spezifischen Bedruckungsdaten Daten für ein Auftragen eines Haftvermittlers umfassen und der Bedruckungsprozesses einen Aufbringungsprozess des Haftvermittlers zur Vorbereitung für einen Druckprozess umfasst.

In einer vorteilhaften Ausführungsform der vorliegenden Erfindung ist vorgesehen, dass die artikelspezifischen Bedruckungsdaten Daten über:
i) eine Anzahl von spannungsführenden Leitern; und/oder
ii) ein Teilungsmaß; und/oder
iii) einen Leitungsquerschnitt; und/oder
iv) eine Anzahl von Leitungspolen; und/oder
v) eine Abmessung; und/oder
vi) einen Bemessungsdauerstrom; und/oder
vii) einen Kennzeichnungstext; und/oder
viii) eine Artikelfarbe; und/oder
ix) ein Artikelmaterial;
umfassen.

In einer vorteilhaften Ausführungsform der vorliegenden Erfindung ist vorgesehen, dass die maschinenspezifischen Bedruckungsdaten Daten über:
i) eine Druckauflösung der für den Bedruckungsprozess verwendeten Druckmaschine; und/oder
ii) eine Volltondichte der für den Bedruckungsprozess verwendeten Druckmaschine; und/oder
iii) eine Druckleistung der für den Bedruckungsprozess verwendeten Druckmaschine; und/oder
iv) eine Formatvorgabe der für den Bedruckungsprozess verwendeten Druckmaschine; und/oder
v) eine maximale Bedruckungsfläche der für den Bedruckungsprozess verwendeten Druckmaschine; und/oder
vi) eine minimale Bedruckungsfläche der für den Bedruckungsprozess verwendeten Druckmaschine; und/oder
vii) mit der Druckmaschine druckbare Farben;
umfassen.

In einer vorteilhaften Ausführungsform der vorliegenden Erfindung ist vorgesehen, dass das Neutraldaten-Format ein
i) XML-Format; und/oder
ii) plattformunabhängiges Datenformat; und/oder
iii) implementationsunabhängiges Datenformat; und/oder
iv) M2M-Datenformat
umfasst.

In einer vorteilhaften Ausführungsform der vorliegenden Erfindung ist vorgesehen, dass die artikelspezifischen Bedruckungsdaten für den Artikel aus einer Beschreibung des Artikels bereitgestellt werden.

Die beiliegenden Zeichnungen sollen ein weiteres Verständnis der Ausführungsformen der vorliegenden Erfindung vermitteln.

Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Figuren der Zeichnungen. Die dargestellten Elemente der Figuren der Zeichnungen sind nicht notwendigerweise maßstabsgetreu zueinander gezeigt.

### Kurze Beschreibung der Figuren

Es zeigen:
- Fig. 1:: eine schematische Darstellung einer Vorrichtung zum Bedrucken eines Artikels gemäß einem Ausführungsbeispiel der vorliegenden Erfindung; und
- Fig. 2:: eine schematische Darstellung eines Flussdiagramms eines Verfahrens zum Bedrucken eines Artikels gemäß einem Ausführungsbeispiel der vorliegenden Erfindung.

### Detaillierte Beschreibung der Ausführungsbeispiele

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

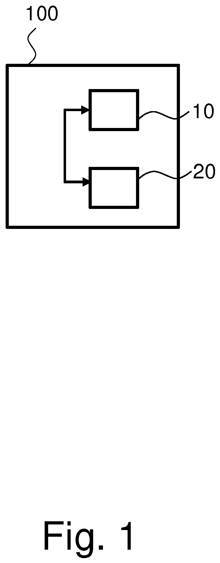

Die Fig. 1 zeigt eine schematische Darstellung einer Vorrichtung zum Bedrucken eines Artikels gemäß einem Ausführungsbeispiel der vorliegenden Erfindung.

Der Begriff "Neutraldaten-Format" wie von der vorliegenden Erfindung verwendet umfasst beispielsweise Daten oder Dateiformate für einen neutralen Dateiaustausch zwischen Einheiten, etwa Rechnern, eines Rechnernetzes.

Der Begriff "Neutraldaten-Format" wie von der vorliegenden Erfindung verwendet kann beispielsweise als ein zwischengeschaltetes Datei-Format verstanden werden, um Daten zwischen beteiligten Systemen des Rechnernetzes zu übersetzen, wie etwa Produktionssysteme oder Bestellsysteme - Webshop - oder interne Datenverarbeitungssysteme - Backend.

Mit anderen Worten ausgedrückt, eine neutrale Datei wird aus ursprünglichen, in anderen Datei-Formaten vorliegenden Daten generiert. Das Ziel-System kann die neutrale Datei jedoch im Gegensatz zu den ursprünglichen Daten auslesen und weiterverarbeiten.

Der Begriff "Produktdaten", insbesondere Produktdaten des Artikels, wie von der vorliegenden Erfindung verwendet beschreibt Daten, welche einen Artikel, nach kundenindividueller Konfiguration, definieren und klassifizieren. Mit anderen Worten, die Produktdaten beschreiben und kennzeichnen Parameter, Eigenschaften, und Ausführungsoptionen des Artikels.

Die Vorrichtung 100 umfasst eine Datenbereitstellungseinrichtung 10 und eine Steuereinrichtung 20.

Die Datenbereitstellungseinrichtung 10 ist dazu ausgebildet, artikelspezifische Bedruckungsdaten für den Artikel aus Produktdaten des Artikels bereitzustellen und maschinenspezifische Bedruckungsdaten für den Artikel in Abhängigkeit einer für den Bedruckungsprozess zu verwendenden Druckmaschine bereitzustellen.

Erfindungsgemäß sind die Produktdaten in einem Neutraldaten-Format bereitgestellt.

Die Steuereinrichtung 20 ist dazu ausgebildet, die artikelspezifischen Bedruckungsdaten und die maschinenspezifischen Bedruckungsdaten zusammenzufügen und darauf basierend die Druckmaschine zum Bedrucken des Artikels anzusteuern.

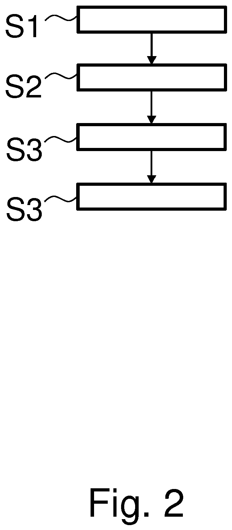

Die Fig. 2 eine schematische Darstellung eines Flussdiagramms eines Verfahrens zum Bedrucken eines Artikels gemäß einem Ausführungsbeispiel der vorliegenden Erfindung.

Als ein erster Verfahrensschritt erfolgt ein Bereitstellen S1 von artikelspezifischen Bedruckungsdaten für den Artikel aus Produktdaten des Artikels mittels einer Datenbereitstellungseinrichtung.

Als ein zweiter Verfahrensschritt erfolgt ein Bereitstellen S2 von maschinenspezifischen Bedruckungsdaten in Abhängigkeit einer für den Bedruckungsprozess zu verwendenden Druckmaschine mittels der Datenbereitstellungseinrichtung.

Als ein dritter Verfahrensschritt erfolgt ein Zusammenfügen S3 der artikelspezifischen Bedruckungsdaten und der maschinenspezifischen Bedruckungsdaten mittels einer Steuereinrichtung.

Als ein vierter Verfahrensschritt erfolgt ein darauf basierendes Ansteuern S4 der Druckmaschine zum Bedrucken des Artikels mittels der Steuereinrichtung.

## Patentansprüche

1. Vorrichtung (100) zum Bedrucken eines Artikels, wobei die Vorrichtung (100) umfasst:
- eine Datenbereitstellungseinrichtung (10), welche dazu ausgebildet ist, artikelspezifische Bedruckungsdaten für den Artikel aus Produktdaten des Artikels bereitzustellen und maschinenspezifische Bedruckungsdaten für den Artikel in Abhängigkeit einer für den Bedruckungsprozess zu verwendenden Druckmaschine bereitzustellen; wobei die Datenbereitstellungseinrichtung (10) dazu ausgebildet ist, die artikelspezifischen Bedruckungsdaten für den Artikel aus den in einem Neutraldaten-Format vorliegenden Produktdaten des Artikels bereitzustellen, welche den Artikel nach kundenindividueller Konfiguration definieren und klassifizieren und welche Parameter, Eigenschaften, und Ausführungsoptionen des Artikels beschreiben; und
- eine Steuereinrichtung (20), welche dazu ausgebildet ist, die artikelspezifischen Bedruckungsdaten und die maschinenspezifischen Bedruckungsdaten zusammenzufügen und darauf basierend die Druckmaschine zum Bedrucken des Artikels anzusteuern.

2. Vorrichtung (100) nach Patentanspruch 1,
wobei die Datenbereitstellungseinrichtung (10) dazu ausgebildet ist, Druckprozess-spezifische Bedruckungsdaten für den Artikel in Abhängigkeit eines zu verwendenden Bedruckungsprozesses bereitzustellen;
wobei die Steuereinrichtung (20) dazu ausgebildet ist, die artikelspezifischen Bedruckungsdaten und die maschinenspezifischen Bedruckungsdaten und die Druckprozess-spezifischen Bedruckungsdaten zusammenzufügen und darauf basierend die Druckmaschine zum Bedrucken des Artikels anzusteuern.

3. Vorrichtung (100) nach Patentanspruch 2,
wobei die Druckprozess-spezifischen Bedruckungsdaten Daten für ein Auftragen eines Haftvermittlers umfassen und der Bedruckungsprozess einen Aufbringungsprozess des Haftvermittlers zur Vorbereitung für einen Druckprozess umfasst.

4. Vorrichtung (100) nach einem der vorherigen Patentansprüche,
wobei die artikelspezifischen Bedruckungsdaten Daten über:
i) eine Anzahl von spannungsführenden Leitern; und/oder
ii) ein Teilungsmaß; und/oder
iii) einen Leitungsquerschnitt; und/oder
iv) eine Anzahl von Leitungspolen; und/oder
v) eine Abmessung; und/oder
vi) einen Bemessungsdauerstrom; und/oder
vii) einen Kennzeichnungstext; und/oder
viii) eine Artikelfarbe; und/oder
ix) ein Artikelmaterial;
umfassen.

5. Vorrichtung (100) nach einem der vorherigen Patentansprüche,
wobei die maschinenspezifischen Bedruckungsdaten Daten über:
i) eine Druckauflösung der für den Bedruckungsprozess verwendeten Druckmaschine; und/oder
ii) eine Volltondichte der für den Bedruckungsprozess verwendeten Druckmaschine; und/oder
iii) eine Druckleistung der für den Bedruckungsprozess verwendeten Druckmaschine; und/oder
iv) eine Formatvorgabe der für den Bedruckungsprozess verwendeten Druckmaschine; und/oder
v) eine maximale Bedruckungsfläche der für den Bedruckungsprozess verwendeten Druckmaschine; und/oder
vi) eine minimale Bedruckungsfläche der für den Bedruckungsprozess verwendeten Druckmaschine; und/oder
vii) mit der Druckmaschine druckbare Farben;
umfassen.

6. Vorrichtung (100) nach einem der vorherigen Patentansprüche,
wobei das Neutraldaten-Format ein
i) XML-Format; und/oder
ii) plattformunabhängiges Datenformat; und/oder
iii) implementationsunabhängiges Datenformat; und/oder
iv) M2M-Datenformat
umfasst.

7. Vorrichtung (100) nach einem der vorherigen Patentansprüche,
wobei die Vorrichtung ferner eine Schnittstelleneinrichtung aufweist, welche dazu ausgebildet ist, die artikelspezifischen Bedruckungsdaten für den Artikel aus einer Beschreibung des Artikels bereitzustellen.

8. Vorrichtung (100) nach einem der vorherigen Patentansprüche,
wobei die Datenbereitstellungseinrichtung (10) dazu ausgebildet ist, die artikelspezifischen Bedruckungsdaten und/oder die maschinenspezifischen Bedruckungsdaten an ein mit der Vorrichtung gekoppeltes Rechnernetz zu übersenden.

9. Verfahren zum Bedrucken eines Artikels, wobei das Verfahren folgende sukzessive Verfahrensschritte umfasst:
- Bereitstellen (S1) von artikelspezifischen Bedruckungsdaten für den Artikel aus in einem Neutraldaten-Format vorliegenden Produktdaten des Artikels, welche den Artikel nach kundenindividueller Konfiguration definieren und klassifizieren und welche Parameter, Eigenschaften, und Ausführungsoptionen des Artikels beschreiben, mittels einer Datenbereitstellungseinrichtung;
- Bereitstellen (S2) von maschinenspezifischen Bedruckungsdaten in Abhängigkeit einer für den Bedruckungsprozess zu verwendenden Druckmaschine mittels der Datenbereitstellungseinrichtung;
- Zusammenfügen (S3) der artikelspezifischen Bedruckungsdaten und der maschinenspezifischen Bedruckungsdaten mittels einer Steuereinrichtung;
- Darauf basierend Ansteuern (S4) der Druckmaschine zum Bedrucken des Artikels mittels der Steuereinrichtung.

10. Verfahren nach Patentanspruch 9,
wobei das Verfahren ferner die folgenden Verfahrensschritte umfasst:
Bereitzustellen von Druckprozess-spezifischen Bedruckungsdaten für den Artikel in Abhängigkeit eines zu verwendenden Bedruckungsprozesses mittels der Datenbereitstellungseinrichtung; und
Zusammenfügen der artikelspezifischen Bedruckungsdaten und der maschinenspezifischen Bedruckungsdaten und der Druckprozess-spezifischen Bedruckungsdaten und darauf basierend Ansteuern der Druckmaschine zum Bedrucken des Artikels.

11. Verfahren nach Patentanspruch 9 oder 10,
wobei die Druckprozess-spezifischen Bedruckungsdaten Daten für ein Auftragen eines Haftvermittlers umfassen und der Bedruckungsprozess einen Aufbringungsprozess des Haftvermittlers zur Vorbereitung für einen Druckprozess umfasst.

12. Verfahren nach einem der Patentansprüche 9 bis 11,
wobei die artikelspezifischen Bedruckungsdaten Daten über:
i) eine Anzahl von spannungsführenden Leitern; und/oder
ii) ein Teilungsmaß; und/oder
iii) einen Leitungsquerschnitt; und/oder
iv) eine Anzahl von Leitungspolen; und/oder
v) eine Abmessung; und/oder
vi) einen Bemessungsdauerstrom; und/oder
vii) einen Kennzeichnungstext; und/oder
viii) eine Artikelfarbe; und/oder
ix) ein Artikelmaterial;
umfassen.

13. Verfahren nach einem der vorherigen Patentansprüche 9 bis 12,
wobei die maschinenspezifischen Bedruckungsdaten Daten über:
i) eine Druckauflösung der für den Bedruckungsprozess verwendeten Druckmaschine; und/oder
ii) eine Volltondichte der für den Bedruckungsprozess verwendeten Druckmaschine; und/oder
iii) eine Druckleistung der für den Bedruckungsprozess verwendeten Druckmaschine; und/oder
iv) eine Formatvorgabe der für den Bedruckungsprozess verwendeten Druckmaschine; und/oder
v) eine maximale Bedruckungsfläche der für den Bedruckungsprozess verwendeten Druckmaschine; und/oder
vi) eine minimale Bedruckungsfläche der für den Bedruckungsprozess verwendeten Druckmaschine; und/oder
vii) mit der Druckmaschine druckbare Farben;
umfassen.

14. Verfahren nach einem der vorherigen Patentansprüche 9 bis 13,
wobei die artikelspezifischen Bedruckungsdaten für den Artikel aus den Produktdaten des Artikels bereitgestellt werden; und wobei vorzugsweise das Neutraldaten-Format ein
i) XML-Format; und/oder
ii) plattformunabhängiges Datenformat; und/oder
iii) implementationsunabhängiges Datenformat; und/oder
iv) M2M-Datenformat
umfasst.

15. Verfahren nach einem der vorherigen Patentansprüche 9 bis 14,
wobei die artikelspezifischen Bedruckungsdaten für den Artikel aus einer Beschreibung des Artikels bereitgestellt werden.

## Claims

1. An apparatus (100) for printing an article, the apparatus (100) comprising:
- a data provision device (10) which is adapted to provide article-specific printing data for the article from product data of the article and to provide machine-specific printing data for the article as a function of a printing machine to be used for the printing process; wherein the data provision device (10) is adapted to provide the article-specific printing data for the article from the product data of the article, which are present in a neutral data format, which define and classify the article according to customer-specific configuration and which describe parameters, properties and design options of the article; and
- a control device (20) which is adapted to combine the article-specific printing data and the machine-specific printing data and, based thereon, to control the printing machine for printing the article.

2. Apparatus (100) according to claim 1,
wherein the data provision device (10) is adapted to provide printing process-specific printing data for the article as a function of a printing process to be used;
wherein the control device (20) is adapted to combine the article-specific printing data and the machine-specific printing data and the printing-process-specific printing data and, based thereon, to control the printing machine for printing the article.

3. Apparatus (100) according to claim 2,
wherein the printing process-specific printing data comprises data for an application of an adhesion promoter, and the printing process comprises an application process of the adhesion promoter in preparation for a printing process.

4. Apparatus (100) according to any one of the preceding claims,
wherein the article-specific printing data contains data on:
i) a number of live conductors; and/or
ii) a pitch; and/or
iii) a conductor cross-section; and/or
iv) a number of line poles; and/or
v) a dimension; and/or
vi) a rated uninterrupted current; and/or
vii) a marking text; and/or
viii) an article color; and/or
ix) an article material.

5. Apparatus (100) according to any one of the preceding claims,
wherein the machine-specific printing data contains data on :
i) a print resolution of the printing machine used for the printing process; and/or
ii) a solid ink density of the printing machine used for the printing process; and/or
iii) a printing performance of the printing machine used for the printing process; and/or
iv) a format specification of the printing machine used for the printing process; and/or
v) a maximum printing area of the printing machine used for the printing process; and/or
vi) a minimum printing area of the printing machine used for the printing process; and/or
vii) colors printable with the printing machine.

6. Apparatus (100) according to any one of the preceding claims,
wherein the neutral data format comprises a
i) XML format; and/or
ii) platform-independent data format; and/or
iii) implementation independent data format; and/or
iv) M2M data format.

7. Apparatus (100) according to any one of the preceding claims,
wherein the apparatus further comprises an interface device adapted to provide the article-specific printing data for the article from a description of the article.

8. Apparatus (100) according to any one of the preceding claims,
wherein the data provision device (10) is adapted to transmit the article-specific printing data and/or the machine-specific printing data to a computer network coupled to the device.

9. Method of printing on an article, the method comprising the following successive process steps:
- providing (S1) article-specific printing data for the article from product data of the article available in a neutral data format, which define and classify the article according to customer-specific configuration and which describe parameters, properties and design options of the article, by means of a data provision device;
- providing (S2) machine-specific printing data as a function of a printing machine to be used for the printing process by means of the data provision device;
- combining (S3) the article-specific printing data and the machine-specific printing data by means of a control device;
- based on this, controlling (S4) the printing machine for printing the article by means of the control device.

10. Method according to claim 9,
wherein the method further comprises the following method steps:
providing printing process-specific printing data for the article in dependence on a printing process to be used by means of the data providing means; and
combining the article-specific printing data and the machine-specific printing data and the printing process-specific printing data and, based on this, controlling the printing machine to print the article.

11. Method according to claim 9 or 10,
wherein the printing process-specific printing data comprises data for an application of an adhesion promoter, and the printing process comprises an application process of the adhesion promoter in preparation for a printing process.

12. Method according to any one of claims 9 to 11,
wherein the article-specific printing data contains data on:
i) a number of live conductors; and/or
ii) a pitch; and/or
iii) a conductor cross-section; and/or
iv) a number of line poles; and/or
v) a dimension; and/or
vi) a rated uninterrupted current; and/or
vii) a marking text; and/or
viii) an article color; and/or
ix) an article material.

13. Method according to any one of the preceding claims 9 to 12,
wherein the machine-specific printing data contains data on:
i) a print resolution of the printing machine used for the printing process; and/or
ii) a solid ink density of the printing machine used for the printing process; and/or
iii) a printing performance of the printing machine used for the printing process; and/or
iv) a format specification of the printing machine used for the printing process; and/or
v) a maximum printing area of the printing machine used for the printing process; and/or
vi) a minimum printing area of the printing machine used for the printing process; and/or
vii) colors printable with the printing machine.

14. Method according to any of the preceding claims 9 to 13,
wherein the article-specific printing data for the article is provided from the product data of the article; and
wherein preferably the neutral data format is a
i) XML format; and/or
ii) platform-independent data format; and/or
iii) implementation independent data format; and/or
iv) M2M data format.

15. Method according to any one of the preceding claims 9 to 14,
wherein the article-specific printing data for the article is provided from a description of the article.

## Revendications

1. Dispositif (100) pour imprimer un article, dans lequel le dispositif (100) comprend :
- un dispositif de fourniture de données (10) qui est conçu pour fournir, pour ledit article, des données d'impression spécifiques à l'article, provenant des données de produit de l'article et pour fournir, pour ledit article, des données d'impression spécifiques à la machine en fonction d'une machine à imprimer à utiliser pour le processus d'impression ; dans lequel le dispositif de fourniture de données (10) est conçu pour fournir, pour ledit article, les données d'impression spécifiques à l'article, provenant des données de produit de l'article présentes dans un format de données neutre, lesquelles données de produit définissent et classent l'article en fonction d'une configuration spécifique au client et décrivent des paramètres, des propriétés et des options de réalisation de l'article ; et
- un dispositif de commande (20) qui est conçu pour combiner les données d'impression spécifiques à l'article et les données d'impression spécifiques à la machine et pour commander, sur la base de celles-ci, la machine à imprimer de manière à imprimer l'article.

2. Dispositif (100) selon la revendication 1, dans lequel le dispositif de fourniture de données (10) est conçu pour fournir, pour l'article, des données d'impression spécifiques à un processus d'impression en fonction du processus d'impression à utiliser ;
dans lequel le dispositif de commande (20) est conçu pour combiner les données d'impression spécifiques à l'article et les données d'impression spécifiques à la machine et pour commander, sur la base de celles-ci, la machine à imprimer de manière à imprimer l'article.

3. Dispositif (100) selon la revendication 2,
dans lequel les données d'impression spécifiques à un processus d'impression comprennent des données pour une application d'un agent adhésif et le processus d'impression comprend un processus d'application de l'agent adhésif en préparation d'un processus d'impression.

4. Dispositif (100) selon l'une des revendications précédentes,
dans lequel les données d'impression spécifiques à l'article comprennent des données concernant :
i) un nombre de conducteurs de tension ; et/ou
ii) une dimension de pas ; et/ou
iii) une section de câble ; et/ou
iv) un nombre de pôles de ligne ; et/ou
v) une dimension, et/ou
vi) un courant étendu assigné ; et/ou
vii) un texte d'identification ; et/ou
viii) une couleur d'article ; et/ou
ix) un matériau d'article.

5. Dispositif (100) selon l'une des revendications précédentes,
dans lequel les données d'impression spécifiques à la machine comprennent des données concernant :
i) une résolution d'impression de la machine à imprimer utilisée pour le processus d'impression ; et/ou
ii) une densité de coloration dans la masse de la machine à imprimer utilisée pour le processus d'impression ; et/ou
iii) une performance d'impression de la machine à imprimer utilisée pour le processus d'impression ; et/ou
iv) une spécification de format de la machine à imprimer utilisée pour le processus d'impression ; et/ou
v) une surface d'impression maximale de la machine à imprimer utilisée pour le processus d'impression ; et/ou
vi) une surface d'impression minimale de la machine à imprimer utilisée pour le processus d'impression ; et/ou
vii) des couleurs imprimables avec la machine à imprimer.

6. Dispositif (100) selon l'une des revendications précédentes,
dans lequel le format de données neutre comprend :
i) un format XML ; et/ou
ii) un format de données indépendant de la plate-forme ; et/ou
iii) un format de données indépendant de l'implémentation ; et/ou
iv) un format de données M2M.

7. Dispositif (100) selon l'une des revendications précédentes,
dans lequel le dispositif comporte en outre un dispositif d'interface qui est conçu pour fournir, pour l'article, les données d'impression spécifiques audit article, provenant d'une description dudit article.

8. Dispositif (100) selon l'une des revendications précédentes,
dans lequel le dispositif de fourniture de données (10) est conçu pour envoyer les données d'impression spécifiques à l'article et/ou les données d'impression spécifiques à une imprimante, à un réseau d'ordinateurs couplé au dispositif.

9. Procédé pour imprimer un article, dans lequel le procédé comprend les étapes successives suivantes consistant à :
- fournir (S1), pour ledit article, des données d'impression spécifiques à l'article, provenant de données de produit de l'article présentes dans un format de données neutre, lesquelles données de produit définissent et classent l'article en fonction d'une configuration spécifique au client et décrivent des paramètres, des propriétés et des options de réalisation de l'article, au moyen d'un dispositif de fourniture de données ;
- fournir (S2) des données d'impression spécifiques à la machine en fonction d'une imprimante à utiliser pour le processus d'impression, au moyen du dispositif de fourniture de données ;
- combiner (S3) les données d'impression spécifiques à l'article et les données d'impression spécifiques à la machine, au moyen d'un dispositif de commande ;
- commander (S4), sur la base de celles-ci, la machine à imprimer de manière à imprimer l'article au moyen du dispositif de commande.

10. Procédé selon la revendication 9,
dans lequel le procédé comprend en outre les étapes suivantes consistant à :
fournir des données d'impression spécifiques au processus d'impression pour l'article en fonction d'un processus d'impression à utiliser, au moyen du dispositif de fourniture de données ; et
combiner les données d'impression spécifiques à l'article et les données d'impression spécifiques à la machine et les données d'impression spécifiques au processus d'impression et commander, sur la base de celles-ci, la machine à imprimer de manière à imprimer l'article.

11. Procédé selon la revendication 9 ou 10,
dans lequel les données d'impression spécifiques à un processus d'impression comprennent des données pour une application d'un agent adhésif et le processus d'impression comprend un processus d'application de l'agent adhésif en préparation d'un processus d'impression.

12. Procédé selon l'une des revendications 9 à 11, dans lequel les données d'impression spécifiques à l'article comprennent des données concernant :
i) un nombre de conducteurs de tension ; et/ou
ii) une dimension de pas ; et/ou
iii) une section de câble ; et/ou
iv) un nombre de pôles de ligne ; et/ou
v) une dimension, et/ou
vi) un courant étendu assigné ; et/ou
vii) un texte d'identification ; et/ou
viii) une couleur d'article ; et/ou
ix) un matériau d'article.

13. Procédé selon l'une des revendications 9 à 12 précédentes, dans lequel les données d'impression spécifiques à la machine comprennent des données concernant :
i) une résolution d'impression de la machine à imprimer utilisée pour le processus d'impression ; et/ou
ii) une densité de coloration dans la masse de la machine à imprimer utilisée pour le processus d'impression ; et/ou
iii) une performance d'impression de la machine à imprimer utilisée pour le processus d'impression ; et/ou
iv) une spécification de format de la machine à imprimer utilisée pour le processus d'impression ; et/ou
v) une surface d'impression maximale de la machine à imprimer utilisée pour le processus d'impression ; et/ou
vi) une surface d'impression minimale de la machine à imprimer utilisée pour le processus d'impression ; et/ou
vii) des couleurs imprimables avec la machine d'impression.

14. Procédé selon l'une des revendications 9 à 13 précédentes, dans lequel les données d'impression spécifiques à l'article sont fournies pour ledit article à partir des données de produit dudit article ; et dans lequel le format de données neutre comprend de préférence :
i) un format XML ; et/ou
ii) un format de données indépendant de la plate-forme ; et/ou
iii)un format de données indépendant de l'implémentation ; et/ou
iv) un format de données M2M.

15. Procédé selon l'une des revendications 9 à 14 précédentes, dans lequel les données d'impression spécifiques à l'article sont fournies pour ledit article à partir d'une description dudit article.
